# EUROPEAN PATENT SPECIFICATION

(11) **EP 1 837 489 B1**
(45) Date of publication and mention of the grant of the patent: **07.03.2012**
(21) Application number: 05816706.5
(22) Date of filing: 13.12.2005
(51) Int. Cl.: F01N 3/02, B01D 53/94, B03C 3/08, F01N 3/01, F01N 3/035, F01N 3/30, B01D 53/32, B01D 53/92, B03C 3/09, B03C 3/38, F01N 3/027

(54) **ELECTRIC TREATING METHOD FOR EXHAUST GAS OF DIESEL ENGINE AND ITS DEVICE**
ELEKTRISCHES BEHANDLUNGSVERFAHREN FÜR ABGAS EINES DIESELMOTORS UND VORRICHTUNG DAFÜR
MOYEN DE TRAITEMENT ELECTRIQUE POUR GAZ D'ECHAPPEMENT DE MOTEUR DIESEL ET SON DISPOSITIF

(30) Priority: 17.12.2004 JP 2004366313; 09.12.2005 JP 2005357030
(43) Date of publication of application: 26.09.2007
(73) Proprietor: Usui Kokusai Sangyo Kaisha Limited, Sunto-gun, Shizuoka (JP)
(72) Inventor: Furugen, Munekatsu, Nishinomiya-shi, Hyogo 662-0875 (JP)
(74) Representative: Tranter, Andrew David
(86) International application number: PCT/JP2005/022881
(87) International publication number: WO 2006/064805

(56) References cited:
- WO-A1-03/074184
- DE-U1- 20 303 087
- JP-A- 5 222 915
- JP-A- 6 159 036
- JP-A- 05 222 915
- JP-A- 06 159 036
- JP-A- 11 156 241
- JP-A- 57 148 017
- JP-A- 2000 246 139
- JP-A- 2004 293 417

## Description

### TECHNICAL FIELD

The present invention relates to an exhaust gas processing technology of removing and collecting a particulate matter (which will be referred to as a "PM" hereinafter) mainly containing carbon included in an exhaust gas from a diesel engine and, more.particularly to an electrical processing technology for a diesel engine exhaust gas which utilizes corona discharge.

### BACKGROUND ART

A PM included in an exhaust gas emitted from this diesel engine not only produces air pollution but also is a substance that is very harmful to human bodies, and hence collection of the exhaust gas is very important. Therefore, many propositions such as an improvement in a combustion method for a diesel engine, adoption of various kinds of filters, or a method of utilizing corona discharge to perform electrical processing, have been already made.

However, just improving a combustion method cannot cope with many driving operations at the time of cool temperature starting of a diesel engine, hill-climbing, or excessive loading, therefore, it is difficult to greatly reduce PMs. For example, in a method of collecting PMs by using such as a ceramic filter, fine holes or gaps are used so as to collect PMs. Accordingly, a pressure drop (a ventilation resistance) of an exhaust gas is precipitously increased when a fixed quantity of PMs is collected, which becomes a factor of degrading a fuel consumption or causes an engine trouble. Further, a filter regenerating method of using a catalyst to burn collected PMs is not preferable since a pressure drop in an exhaust gas is increased due to deterioration in a catalyst caused by long-term use of the catalyst.

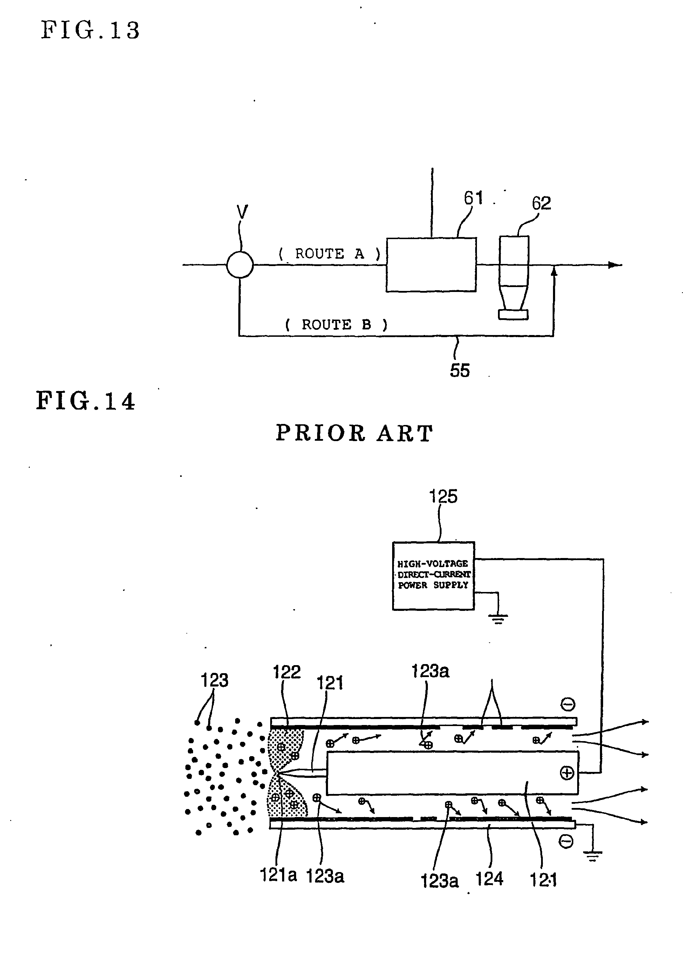

On the other hand, as depicted in FIG. 14 showing an example, as a method of utilizing corona discharge for electrical processing, there is known an exhaust PM collection apparatus for a diesel engine (see, e.g., Patent Document 1) comprising: a needle electrode 121 which provokes corona discharge around a needlepoint 121a to electrically charge PMs 123 in an exhaust gas; a collecting electrode 124 which collects the electrically charged PMs 123a by an electrostatic force; and a high-voltage direct-current power supply 125 that applies a predetermined direct-current high voltage to a space between the needle electrode 121 and the collecting electrode 124.
Furthermore, an exhaust gas purifying apparatus (see e.g., Patent Document 2) comprising: a cylindrical body constituting one of a pair of collecting electrodes for PM collection provided in an exhaust path; an electrode body that is provided at a central part of the cylindrical body to extend in an axial direction and constitutes the other of the pair of collecting electrodes; a high-voltage power supply region that forms an electrostatic field between the pair of collecting electrodes to accumulate PMs in an exhaust gas on an inner surface of the cylindrical body; and a scratching region that relatively swivels along the inner surface of the cylindrical body with respect to the cylindrical body to scratch off the PMs stored on the inner surface of the cylindrical body, an exhaust gas purifying apparatus (see, e.g., Patent Document 3) comprising: a plurality of PM collecting electrodes each including an electrical insulator layer and a catalytic layer; and a charge electrode including a plurality of needle electrodes which are respectively combined with the PM collecting electrodes and protrude toward the electrical insulator layer, and other have been aboundingly proposed.
Patent Document 1: Japanese Patent Application Laid-open No: 112246-1997
Patent Document 2: Japanese Patent Application Laid-open No: 173637-1994
Patent Document 3: Japanese Patent Application Laid-open No: 2003-269133
We are also aware of JP-6-159036 which discloses an exhaust gas purifying apparatus having all of the features of the pre-characterising portion of claims 1 and 2, and JP-5-222915A which discloses an exhaust gas purifying apparatus with a cyclone separator.

### DISCLOSURE OF INVENTION

### PROBLEM TO BE SOLVED BY THE INVENTION

However, the conventional diesel engine exhaust gas processing technology that utilizes corona discharge for electrical processing still has the following problems.
Each of the exhaust PM collecting apparatuses disclosed in Patent Documents 1 and 2 adopts an electrostatic precipitator method that is a so-called one-stage method, and has basic problems, i.e., a difficulty in setting a discharge voltage and a collection deflecting voltage to respective appropriate conditions since both the voltages have the same potential, and assuring a large gap between a deflecting electrode and a collecting electrode to avoid generation of sparks. Therefore, the exhaust PM collecting apparatuses disclosed in Patent Documents 1 and 2 have a drawback that particles passing straight through a collecting section without being collected are increased and a collection efficiency is lowered. Furthermore, in order to increase the collection efficiency, a capacity of a collection region must be enlarged, and a size of the apparatus must be increased, which is inappropriate as an automobile component. Moreover, although the exhaust gas collection apparatus disclosed in Patent Document 3 adopts a so-called two-stage electrostatic precipitator method, and it has a disadvantage. That is, since a countermeasure for contamination of the needle electrodes is not taken, when a high voltage of several ten thousand volts is applied to the discharge electrode, contamination degrades electrical insulation properties, and PM collecting performance cannot be demonstrated. Additionally, the discharge electrode cannot avoid defacement due to an exhaust gas having corrosion properties, and cannot maintain stable performance over a long term. Further, in case of a wire electrode, breaking is apt to occur due to a vibration or an impact shock during traveling such as an automobile, and this electrode has a problem in strength. That is, the conventional exhaust gas processing means that utilizes corona discharge for electrical processing has a difficulty in assuring high insulation properties of the discharge electrode and still has problems in practical utility.

The present invention provides an electrical processing method and an electrical processing apparatus for a diesel engine exhaust gas that can solve the problems in the conventional diesel engine exhaust gas processing technology utilizing corona discharge, highly efficiently remove PMs in an exhaust gas from a diesel engine, and demonstrate stable performance for a long time.

### MEANS FOR SOLVING PROBLEM

An electrical processing method for a diesel engine exhaust gas according to the present invention is characterized by all features of claim 1. A discharge and charge region formed of a corona discharge region and a charge region is provided on an upstream side of an exhaust gas path, each particulate matter mainly containing carbon in an exhaust gas is charged with a corona-discharged electron, and a collection region arranged in the exhaust gas path collects the charged particulate matter.

Further, an electrical processing apparatus for a diesel engine exhaust gas according to the present invention is characterized by all features of claim 2. A discharge and charge region which charges each particulate matter mainly containing carbon in an exhaust gas with a corona-discharged electron and is formed of a corona discharge region and a charge region is provided on an upstream side of an exhaust gas path, and a collection region that collects the charged particulate matter is arranged in the exhaust gas path.

The method and apparatus according to the present invention are characterized in that a distal end of the corona discharge region on a discharge side of a needle electrode is arranged to face a downstream side of an exhaust gas flow to discharge corona electrons toward the downstream side, the needle electrode is inserted and arranged in a seal gas tube formed of an insulator, the seal gas tube is formed of alumina ceramics, a protruding region of the needle electrode from a seal gas tube end is placed in a potential core of a gas flow in the seal gas tube, the needle electrode is coated with a material having electrical insulation and corrosion resistance, quarts glass, alumina, or ceramics is used as a coating material of the needle electrode, the collection region has a single-layer plate structure, the collection region is constituted of a punching metal type collection plate or a slit type collection plate, and a rate of a hole area defined as (an opening region total area)/(a collection region substantial front area) is set to 3 to 20%, the collection region is constituted of a base plate formed of one plate having no opening in a collection surface thereof and a lattice-like fin provided on a collection surface side of the base plate, a collection plate holding rod is arranged in a seal tube made of an insulator, a stabilizing plate is arranged in all or part of the seal gas tube, and a dummy tube region is provided on a tube end placed on the opposite side of a needle electrode distal end side of the seal gas tube in parallel with a direction of an exhaust gas flow.
It is to be noted that, as a preferable conformation, the seal gas tube having the dummy tube region satisfies conditions of L1/D>1.5 and L2/D>0.5, where D is an internal diameter of the seal gas tube, L2 is a length of the dummy tube region in the seal gas tube region, and L1 is a length from the dummy tube region to the distal end region.

Moreover, in the electrical processing apparatus for a diesel engine exhaust gas according to the present invention, a cyclone precipitator is additionally provided on a rear stage of the electrical processing apparatus for an exhaust gas.

Further, the collection region in the electrical processing apparatus for a diesel engine exhaust gas with the cyclone precipitator may be constituted by arranging a plurality of collection plates each of which is formed of a base plate made of one plate having no opening on a collection surface thereof and a lattice-like fin provided on the collection surface side of the base plate so as to form a gap between the collection plates and the apparatus main body inner wall.

Furthermore, particle agglomeration coarsening means may be arranged on a front stage of the cyclone precipitator. Either a particle agglomeration tube having a honeycomb structure or a particle agglomeration plate constituted by arranging a plurality of punching metals or wire sheets at predetermined intervals can be used as the particle agglomeration coarsening means.

On the other hand, as a maintenance scheme of the collection plate in the electrical processing apparatus for an exhaust gas, a scheme of arranging a bypass duct for the exhaust gas between the upstream side and the downstream side of the apparatus and performing maintenance of the collection plate while a gas switching valve is used to flow the exhaust gas through the bypass duct can be used.

It is to be noted that, in the apparatus according to the present invention, an inner wall surface of the apparatus main body in the electrical processing apparatus for an exhaust gas can be also used as the collection surface for the particulate matters.

### EFFECT OF THE INVENTION

According to the electrical processing method and apparatus for an exhaust gas from a diesel engine of the present invention, a PM in the exhaust gas can be removed with a high collection efficiency. Moreover, removal of the PM can be stably maintained over a long period with a high collection efficiency, and an excellent effect, such as achieving a substantial maintenance-free state required as an automobile component can be demonstrated.
Incidentally, it is needless to say that the present invention is effective for not only collection of an exhaust gas from the diesel engine but also collection of various kinds of exhaust gases.

### BRIEF DESCRIPTION OF DRAWINGS

FIG. 1 is a schematic view showing an electrical processing apparatus for a diesel engine exhaust gas;
FIG. 2 is an explanatory drawing of a needle electrode of a discharge electrode and a seal tube distal end region;
FIG. 3 is a schematic view showing another seal gas tube example ;
FIG. 4 is a schematic view showing the seal gas tube in the present invention;
FIG. 5 is a schematic explanatory drawing showing a PM collection plate in the invention;
FIGS. 6 are explanatory views of through holes in a PM collection plate in the invention, in which (a) is an explanatory view showing a position and a hole diameter of each through hole in the PM collection plate and (b) is a cross-sectional view taken along a line A-A;
FIGS. 7 are schematic views showing another PM collection plate in the invention, in which (a) is a front view and (b) is a side view;
FIG. 8 is a schematic explanatory view showing an example of PM combusting means of a collection plate in the apparatus according to the present invention;
FIG. 9 is a schematic view showing an apparatus (with a cyclone precipitator) in an electrical processing apparatus for a diesel engine exhaust gas according to the present invention;
FIG. 10 is a schematic perspective view showing a collection plate in the apparatus depicted in FIG. 9 in an enlarging manner;
FIG. 11 is a schematic perspective view showing a particle agglomeration tube having a honeycomb structure as an example of particle agglomeration coarsening means disposed on a front stage of a cyclone precipitator in the apparatus depicted in FIG. 9;
FIG. 12 is a schematic perspective view showing a particle agglomeration plate constituted by arranging a plurality of punching metals at intervals as another example of the particle agglomeration coarsening means;
FIG. 13 is a schematic view showing a maintenance mode for a collection plate ; and
FIG. 14 is a schematic explanatory drawing showing an example of a conventional exhaust PM collection apparatus for a diesel engine.

### EXPLANATIONS OF LETTERS OR NUMERALS

- 1: exhaust gas path
- 1-1, 61-1: main body wall
- 2: discharge and charge region
- 2-2: charge region
- 3, 3a, 3b, 3c, 71-1: collection plate
- 4: needle electrode
- 5: seal gas tube
- 5-1: stabilizing plate
- 5-2: dummy tube region
- 6: high-voltage power supply device
- 7: exhaust gas guide tube
- 8: PM ( particulate matter )
- 9: holding rod seal tube
- 10: corona electron
- 40: changeover switch
- 40a,: 40b terminal
- 41: heating power supply device
- 61: exhaust gas electrical processing apparatus
- 55: bypass duct
- 62: cyclone precipitator
- 80: particle agglomeration tube
- 90: particle agglomeration plate
- G1: exhaust gas
- G2: seal gas
- Pc: potential core
- V: switching valve

### BEST MODE(S) FOR CARRYING OUT THE INVENTION

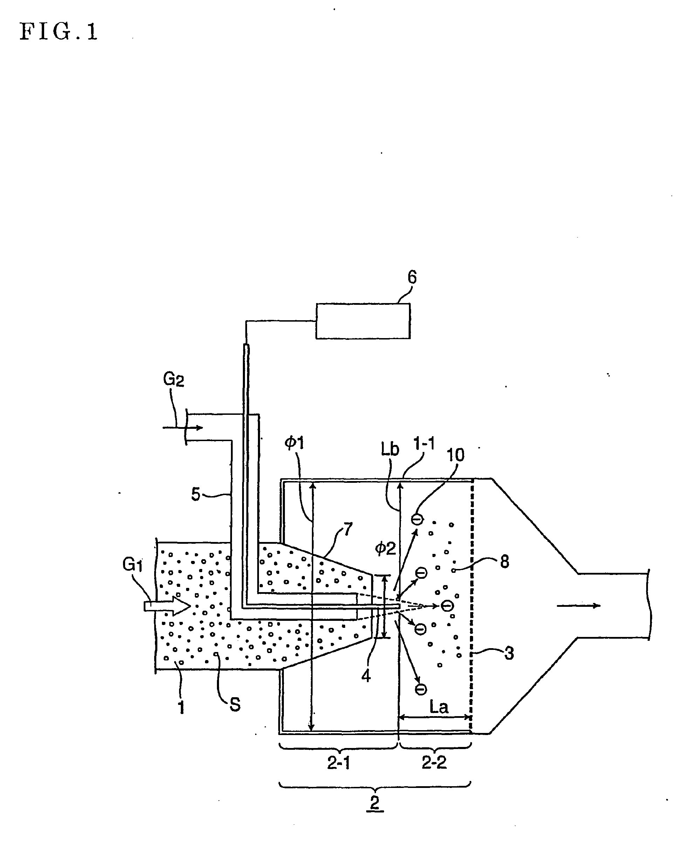

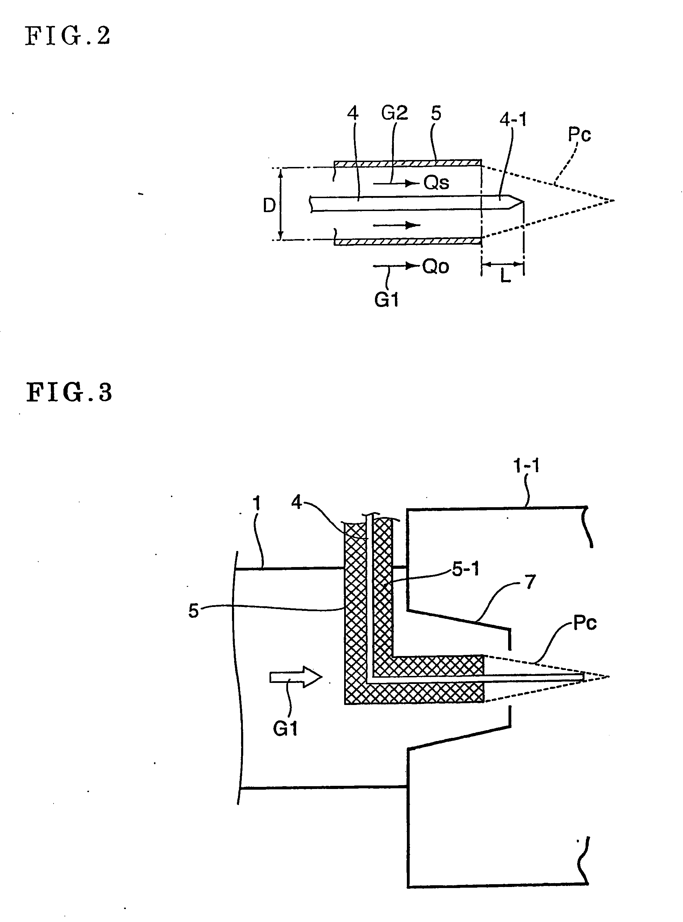

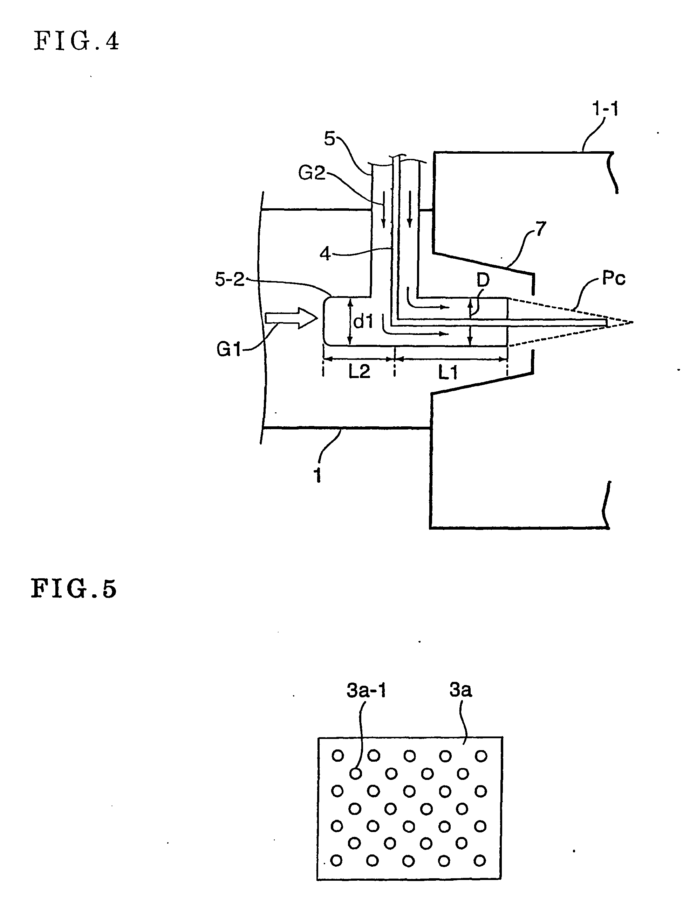

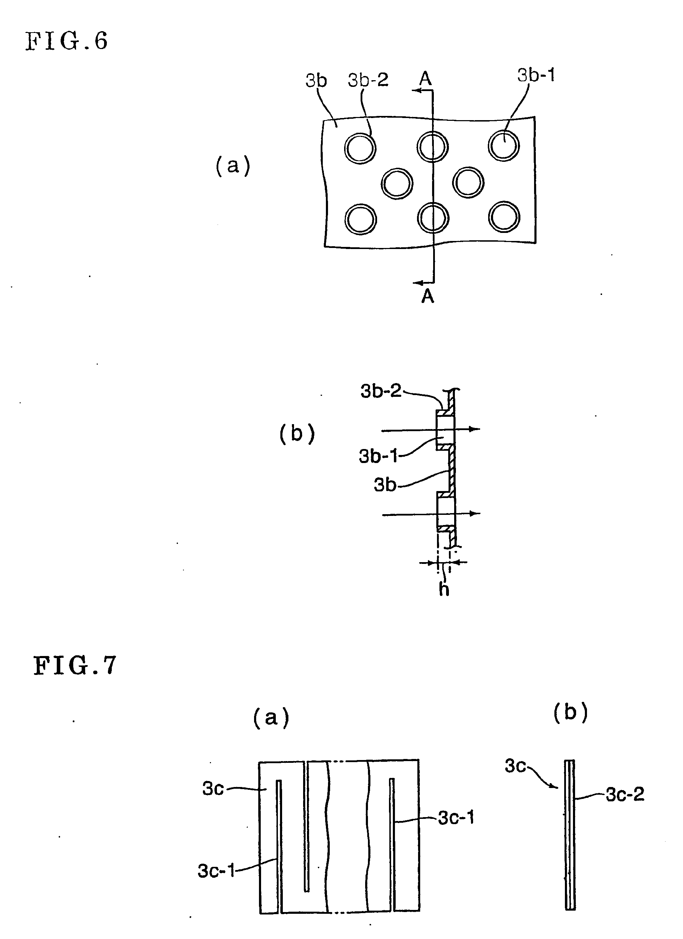

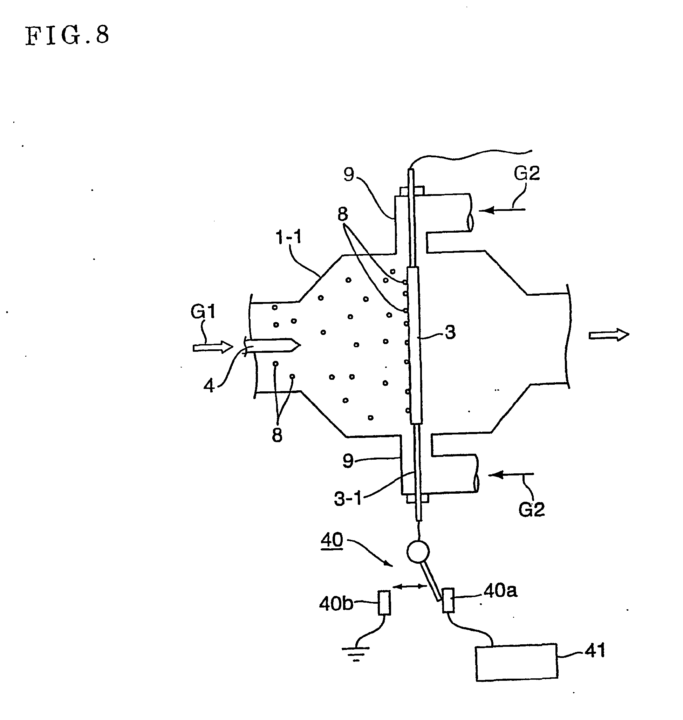

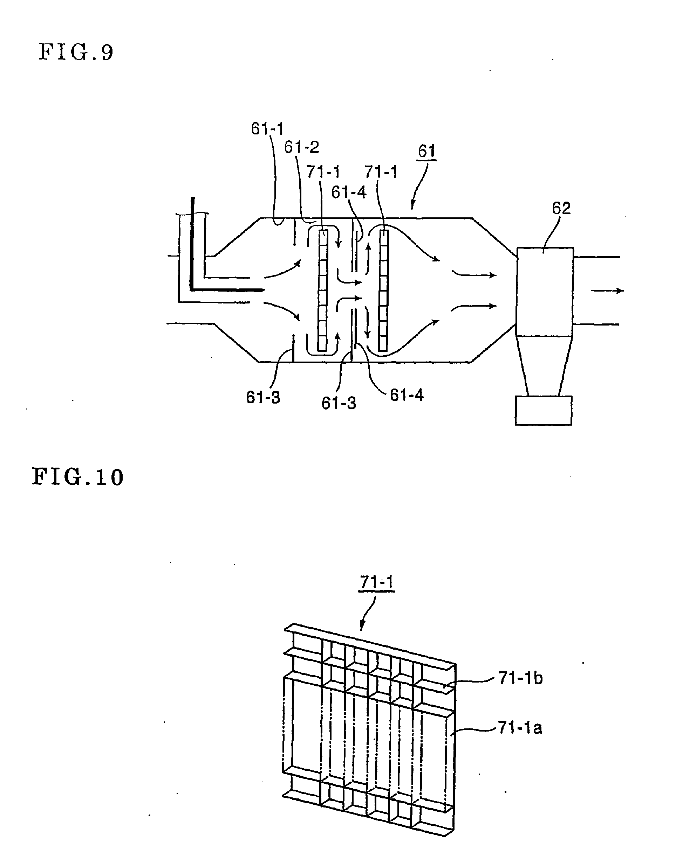

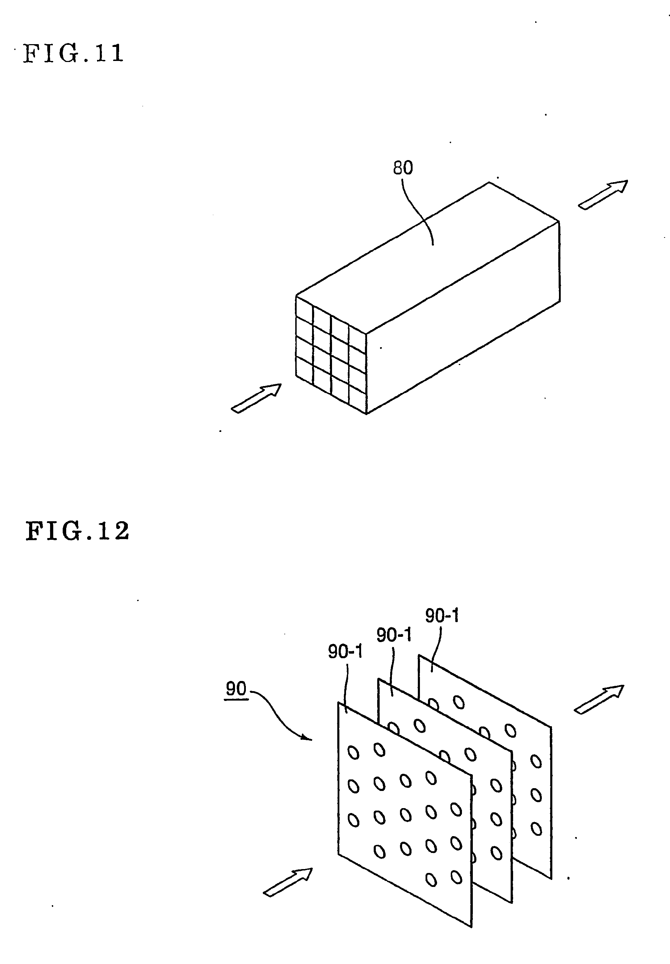

FIG. 1 is a schematic view showing an electrical processing apparatus for a diesel engine exhaust gas ; FIG. 2 is an explanatory drawing of a needle electrode of a discharge electrode and a seal tube distal end region ; FIG. 3 is a schematic view showing another seal gas tube example; FIG. 4 is a schematic view showing the seal gas tube in the present invention; FIG. 5 is a schematic explanatory drawing showing a PM collection plate in the invention; FIGS. 6 are explanatory views of through holes in a PM collection plate in the invention , in which (a) is an explanatory view showing a position and a hole diameter of each through hole in the PM collection plate and (b) is a cross-sectional view taken along a line A-A; FIGS. 7 are schematic views showing another PM collection plate in the invention, in which (a) is a front view and (b) is a side view; FIG. 8 is a schematic explanatory view showing an example of PM combusting means of a collection plate in the apparatus according to the present invention; FIG. 9 is a schematic view showing an apparatus (with a cyclone precipitator) in an electrical processing apparatus for a diesel engine exhaust gas according to the present invention; FIG.10 is a schematic perspective view showing a collection plate in the apparatus depicted in FIG. 9 in an enlarging manner; FIGS. 11 and 12 show particle agglomeration coarsening means disposed at a front stage of a cyclone precipitator in the apparatus depicted in FIG. 9, in which FIG. 11 is a perspective view showing a particle agglomeration tube having a honeycomb structure and FIG. 12 is a schematic perspective view showing a particle agglomeration plate constituted by arranging a plurality of punching metals at intervals; and FIG. 13 is a schematic view showing a maintenance mode for a collection plate.

As shown in FIG. 1, an exhaust gas electrical processing apparatus according to the present invention has a structure (two-stage type) in which a discharge and charge region 2 which charges each particulate matter S mainly containing carbon in an exhaust gas G1 with a corona-discharged electron 10 and includes a corona discharge region 2-1 and a charge region 2-2 is provided in a main body wall 1-1 provided on an upstream side of an exhaust gas path 1 and a collection plate 3 that collects the charged particulate matter S in the exhaust gas path 1 is arranged in the main body wall 1-1, a needle electrode 4 constituting a discharge electrode is arranged in the exhaust gas path to face a downstream side of an exhaust gas flow through the inside of a seal gas tube 5 formed of an insulator, e.g., ceramics like alumina or heat-resistant glass, a distal end region protrudes from an opening end of the seal gas tube 5 by a predetermined length, and wiring is carried out in such a manner that a direct-current voltage of several ten thousand volts is applied from an external high-voltage power supply device 6. As a material of this needle electrode 4, an electroconductive material, e.g., stainless steel or a cemented carbide alloy is used. Further, in order to facilitate charge of the corona electrons 10, an exhaust gas guide tube 7 is provided in the main body wall 1-1 in a protruding condition provided in the middle of the exhaust gas path 1 so that an exhaust gas G1 flows near a distal end of the needle electrode 4. Furthermore, although a relationship between an internal diameter φ1 of the main body wall 1-1 region and an internal diameter φ2 of an outlet region of the exhaust gas guide tube 7 is not restricted in particular, φ2/φ1<approximately 0.5 is preferable. Moreover, in order to effectively collect the particulate matters S, it is preferable to set a relationship between a distance La between the distal end of the needle electrode 4 and a collection plate 3 and a distance Lb between the distal end of the needle electrode 4 and the main body inner wall to La<Lb. It is to be noted that the inner wall surface of the main body wall 1-1 can also function as a collection surface for the particulate matters S in the apparatus , and bonding a later-explained collection plate 71-1 depicted in FIG. 10 to the inner wall surface of the main body wall 1-1 can also provide the collection surface.

The outlet of the seal gas tube 5 from which a seal gas G2 flows out is arranged to face a downstream side of a flow of the exhaust gas G1 to avoid contamination of the needle electrode 4. A ratio of a flow velocity Qs (FIG. 2) of the seal gas G2 flowing through the seal gas tube 5 with respect to an average flow velocity Qo of the exhaust gas G1 flowing outside the seal gas tube 5 (Qs/Qo) is set to 0.15 or above, thereby avoiding entrainment of the exhaust gas G1 into the seal gas tube 5. A gas having insulation, e.g., air can be used as the seal gas.

Additionally, a protrusion length L (FIG. 2) of the needle electrode 4 from the distal end of the seal gas tube 5 is set to be placed within a potential core Pc of the seal gas flow in the seal gas tube 5 while considering contamination of the needle electrode. The protrusion length L is practically 50 mm to 200 mm. Incidentally, giving a brief explanation of the potential core Pc, when the seal gas (a fluid) belches out from the seal gas tube 5, a uniform conical flow field having the same flow velocity and the same gas component as those in a nozzle is generated at the outlet of the seal gas tube. This region is called a potential core. A length of the region of the potential core Pc is usually approximately fivefold of an internal diameter D of seal gas tube 5. As the internal diameter D of the seal gas tube 5, it can be selected an internal diameter dimension with which a spark does not occur with respect to the PMs that have adhere to the seal gas tube outer peripheral surface from the needle electrode 4 at the seal gas tube outlet. In case of a voltage of several ten thousand volts, it is good enough to set the practical internal diameter D to approximately 20 to 100 mm.

When this needle electrode 4 continues corona discharge for a long time in an exposed state, the needle electrode distal end 4-1 reacts with nitrogen in atmospheric air to generate nitrate, and discharge characteristics are deteriorated. Therefore, in order to realize a maintenance-free state for a long time, a coating for preventing corrosion must be provided. As a coating material, a material having electrical insulation and corrosion resistance, e.g., quartz glass, alumina, or ceramic is suitable. When the thickness of the coating is very thick, an electric field strength at an outer surface of the coating becomes below the corona discharge onset field strength Ec, and hence there is an appropriate thickness that is dependent on an electrode shape, a direct-current voltage applied to the needle electrode, or exhaust gas conditions, a thickness of approximately 0.1 to 0.5 mm is practically sufficient. It is to be noted that the coating thickness of a part except the distal end region of the needle electrode is not restricted in particular, and it may be thick.

It is to be noted that an electrode shape that performs corona discharge is not restricted as long as a non-uniform electric field is generated and, for example, a structure where a small ball or an electrode short wire is provided at an electrode distal end (not shown) may be adopted.

Further, as means for further stabilizing a flow of the seal gas at the outlet of the seal gas tube 5, countermeasures depicted in FIGS. 3 and 4 are taken.
That is, as the countermeasure depicted in FIG. 3, a stabilizing plate 5-1 is arranged in the seal gas tube 5, and a plate-like member or a honeycomb member is used as the stabilizing plate 5-1. This stabilizing plate 5-1 does not have to be necessarily provided over an entire length of the seal gas tube 5, and it may be provided at a part where a direction of a gas flow varies, e.g., a bent part of the seal gas tube 5. A function of this stabilizing plate 5-1 further stabilizes the seal gas flow at the outlet of the seal gas tube 5, thereby forming the very stable potential core Pc at the outlet region of the seal gas tube 5.

Furthermore, in the present invention as the countermeasure depicted in FIG. 4, a dummy tube region 5-2 protruding toward the upstream side of the exhaust gas path 1 is provided at the bent part of the seal gas tube 5, thereby stabilizing a gas flow in the seal gas tube 5. Here, as conditions for stabilizing the seal gas flow, it was revealed as a result of an experiment that respectively setting a length L2 of the dummy tube region 5-2 of the seal gas tube 5 region and a length L1 from the dummy tube region to the distal end region to L1/D>1.5 and L2/D>0.5 can suffice, where D is an internal diameter of the seal gas tube 5. An internal diameter di of the dummy tube region 5-2 may be a diameter larger than or smaller than the internal diameter D of the seal gas tube 5. Like the seal gas tube including the stabilizing plate 5-1, a function of this dummy tube region 5-2 stabilizes a seal gas flow at the outlet of the seal gas tube 5, thereby forming the very stable potential core Pc at the outlet region of the seal gas tube 5. Incidentally, it can be considered that the seal gas flow is stabilized by providing the dummy tube region 5-2 to the seal gas tube 5 because a so-called buffer effect which attenuates a fluctuation in pressure in a seal gas tube cross section caused due to bending a flow of the seal gas occurs. Moreover, L1/D>1.5 and L2/D>0.5 are set because an influence of bending a seal gas flow is not eliminated when L1/D is less than 1.5 and the sufficient buffer effect cannot be obtained when L2/D is less than 0.5. It is to be noted that a facet of the dummy tube region 5-2 on the upstream side is not restricted to a flat shape and it may be a semicircular shape or an elliptic shape bulging toward the upstream side.

On the other hand, supply of the seal gas is stopped when an engine is shut off. As to a seal gas stop timing, it is desirable to stop the seal gas after a brief interval from shutting off the engine. That is because, when both the engine and the seal gas are simultaneously stopped, the exhaust gas remaining in the exhaust gas tube or the collection device may possibly enter the seal gas tube 5 to contaminate the inside of the seal gas tube or the needle electrode 4. Additionally, in regard to a direction of the seal gas tube 5 when it is inserted into the collection device main body, it is desirable to insert the seal gas tube 5 from an upper side toward a lower side. The reason is that dews formed at the time of dew condensation of the exhaust gas can flow out toward the outlet side of the seal gas tube.

Further, in the apparatus according to the present invention, the collection plate 3 arranged on the downstream side of the needle electrode 4 is of a type which is arranged in such a manner that a collection surface becomes vertical to a flow of the exhaust gas, generates an electric field between a direct-current voltage of the needle electrode 4 and the collection plate, and collects PMs 8 charged in the discharge and charge region 2 by using a coulomb force, and three types, i.e., punching metal type collection plates 3a and 3b depicted in FIGS. 5 and 6 and a slit type collection plates 3c shown in FIGS. 7 can be exemplified. That is, each of the punching metal type collection plates 3a and 3b depicted in FIGS. 5 and 6 has many through holes 3a-1 or 3b-1 formed in a single plate, and the collection plate 3b depicted in FIGS. 6 has each protruding flange (a burring wall) 3b-2 provided around each through hole 3b-1. Providing the protruding flange 3b-2 enables forming a swirling current or a stagnation in a gas flow, thereby further improving a collection efficiency of the charge PMs 8. A height h of this protruding flange 3b-2 may be practically approximately 0.1 to 5 mm.

In case of the punching metal type collection plates 3a and 3b depicted in FIGS. 5 and 6, assuming that an opening area of the through hole 3a-1 is S and the number of the holes is N, a total area of the opening regions is NS and, assuming that a substantial front area of the collecting region is SO, a rate of the hole area can be defined as (the opening region total area NS)/(the collection region substantial front area SO). Further, in case of the slit type collection plate 3c, like the punching metal type collection plate 3a, a rate of the hole area can be defined as (a slit opening region total area NS)/(a collecting region substantial front area SO). Furthermore, both the rate of the hole area in the punching metal type collection plate and that in the slit type collection plate are set to 3 to 20%. That is because a collection amount of the PMs 8 is increased but a pressure drop becomes large when the rate of the hole area is less than 3%, and a sufficient collection amount of the PMs 8 cannot be obtained when the rate of the hole area exceeds 20%.

Furthermore, although a low average flow velocity of the exhaust gas G1 flowing through the collection region is desirable in terms of a collection efficiency, a lateral cross-sectional area with which the collection region substantial front area SO becomes 1.5-fold or above of a lateral cross-sectional area of the exhaust gas guide tube 7 and the average flow velocity of the exhaust gas G1 flowing through the collection region becomes 20 m/sec or below is practically desirable.

Although a material of each of the collection plates 3a, 3b, and 3c is not restricted in particular, using a ferrite-type stainless steel plate or an austenitic stainless steel superior in heat resistance/corrosion resistance, or a metal plate formed of such as nickel-chrome steel as a heating element is preferable. Moreover, the collection plate can be coated with a washcoat layer to support a catalyst.

It is to be noted that a front shape of the collection plate 3 is not restricted in particular as long as it is a shape allowing the exhaust gas to flow without resistance, it can be usually determined in accordance with a cross-sectional shape of the apparatus main body region, e.g., a circular shape, a square shape, any other shape.

In the apparatus depicted in FIG. 1, when a direct-current high voltage that is several ten thousand volts is applied to the needle electrode 4 from the external high-voltage power supply device 6, a corona discharge phenomenon occurs at the needle electrode distal end 4-1 to emit the corona electrons 10. The PMs 8 in the exhaust gas G1 flowing through a space in the discharge and charge region 2 are charged with the corona electrons 10. The direct-current voltage applied to the needle electrode 4 is set and supplied in such a manner that an electric field strength near the electrode distal end becomes equal to or above the corona onset field strength. A set value of the direct-current voltage varies depending on conditions of the exhaust gas (a flow velocity, a PM content, a temperature, and others), but approximately 20 to 70 kV is practically sufficient.

In the exhaust gas processing apparatus the charged PMs 8 once collected on each collection plate do not fall off due to a gravitational force or a hydrodynamic force of a gas flow. This is characteristics of fine particle adhesion. In case of a particle having a particle diameter of 30 µm or below, an adhesion force based on a van del Waals force becomes larger than the gravitational force, and its ratio becomes extremely large (100-fold or above) when the particle diameter is 2.5 µm or below which is said to be harmful to humans, and the collected PMs 8 do not fall off by vibrations and others during traveling.

Additionally, since the collection region in each exhaust gas processing apparatus has a structure where a pressure drop is very small, a trouble involved by the pressure drop rarely occurs even if the PMs 8 are deposited on the collection plate. In a normal driving state, when an exhaust gas temperature is increased due to such as high-speed driving or high-load driving, the PMs 8 are naturally subjected to combustion. However, when a traffic jam continues for a long time in an urban district etc., the PMs 8 cannot be naturally subjected to combustion. In such a situation, the PMs 8 deposited on the collection plate can be forcibly subjected to combustion by electrical heating.
FIG. 11 shows an example of PM combusting means of the collection plate . As a material of the collection plate 3, a thin plate formed of such as ferrite-type stainless steel or austenitic stainless steel superior in heat resistance and corrosion resistance, or nickel-chrome steel as a heating element is used, and the collection plate 3 is utilized as a heater.
As this means, a changeover switch 40 is disposed at an end of the holding rod 3-1 of the collection plate 3, this switch can be connected to a terminal 40a on a heater power supply device 41 side when electrically heating the collection plate 3, and the switch can be connected with a terminal 40b on an earth side when collecting the PMs. Since a necessary power for this electrical heating is as small as 1 to 4 kW, a battery or the like mounted on a vehicle can be used as the heater power supply. The PMs 8 collected on the collection plate 3 can be safely subjected to combustion at a temperature of approximately 650 to 700°C without generating flames. It is to be noted that disposing a temperature gauge (not shown) such as a thermo couple to the collection plate 3 and controlling a temperature at the time of electrical heating to avoid an unnecessary increase in temperature is desirable.

In addition, electrical insulation of the holding rod 3-1 of the collection plate 3 is basically coated by such as quartz glass, alumina, or ceramic, which have electrical insulation and corrosion resistance, like the case of insulation of the needle electrode 4. The holding rod 3-1 is disposed in a holding rod seal tube 9 made of electric insulator such as alumina and ceramic; and the seal gas G2 having insulation properties, such as air, flows in the holding rod seal tube 9.

The PMs in the exhaust gas from the diesel engine can be basically collected on the collection plate. An electric resistivity p may be reduced depending on combustion conditions of the diesel engine, and the collection plate cannot sufficiently cope with this situation in this case. Thus, according to the present invention, a cyclone precipitator is additionally provided on a rear stage of the exhaust gas electrical processing apparatus.
In the exhaust gas from the diesel engine, an electric resistivity p of the PM greatly fluctuates depending on driving conditions, and there are both a PM having a high electric resistivity p and a PM having a low electric resistivity p. In general, there is a tendency that the electric resistivity p is low in high-temperature combustion during high-speed driving and the electric resistivity p is high in low-temperature combustion. Therefore, means for removing the PM contained in the exhaust gas from the diesel engine must have performance enabling efficient collection of not only the PM having the high electric resistivity p but also the PM having the low electric resistivity p. Accordingly, the present invention provides the electrical processing apparatus for the exhaust gas from the diesel engine that can sufficiently cope with a case where the electric resistivity p is high or low by additionally providing the cyclone precipitator on the rear stage of the exhaust gas electrical processing apparatus.

An apparatus depicted in FIG. 9 is an example of an electrical processing apparatus for a diesel engine exhaust gas that can sufficiently cope with a case where the electric resistivity p is high or low. A cyclone precipitator 62 is arranged on the rear stage of an exhaust gas electrical processing apparatus 61 having substantially the same structure as the above examples.
Here, as shown in FIG. 10 in an enlarging manner, each collection plate 71-1 in this exhaust gas electrical processing apparatus 61 is constituted of a base plate 71-1a formed of a single plate without an opening such as a hole in a collection surface thereof and a lattice-like fin 71-1b provided on a collection surface side of the base plate 71-1a. The collection plates 71-1 are arranged at appropriate intervals in such a manner that a gap 61-2 through which the exhaust gas flows can be formed between each collection plate 71-1 and an inner wall of a main body wall 61-1 of the exhaust gas electrical processing apparatus 61. Since a size of this gap 61-2 does not affect a collection efficiency, determining the size while considering a pressure drop can suffice. The lattice-like fin 71-1b is provided to the collection plate 71-1 in order to efficiently collect charged PMs on the base plate 71-1a by producing a stagnation effect in a flow of a gas G1.
As a material of each of the base plate 71-1a and the lattice-like fin 71-1b of this collection plate 71-1, an electroconductive material such as a metal is naturally used since the base plate 71-1a is earthed, whereas an insulator such as ceramics is preferable for the lattice-like fin 71-1b when considering an efficiency, i.e., a PM collection efficiency and a jumping agglomeration efficiency (a phenomenon that particles undergo cohesion in a process of repeating re-entrainment on the base plate, resulting in agglomeration coarsening).
That is, when the lattice-like fin 71-1b is formed of a metal, since electric force lines are concentrated on a distal end of the lattice-like fin 71-1b close to the distal end of the needle electrode 4, the charged PMs flow toward the distal end of the lattice-like fin 71-1b. It is difficult for the PMs to reach the base plate 71-1a since a gas flow is fast at this region, and the PMs are easily flowed to rearward of the collection plate, thereby the collection efficiency on the base plate 71-1a deteriorates.
It is to be noted that, in the main body of the exhaust gas electrical processing apparatus 61, a plate 61-3 with a guide hole that facilitates a charging of the PMs may be installed on the upstream side of the exhaust gas flow, and the plate 61-3 and an electric field plate 61-4 with a guide hole respectively that facilitates a collection of the PMs may be installed between adjoined the collection plates 71-1. In this case, a high voltage is supplied to the electric field plate 61-4 from a high-voltage power supply device (not shown), and each collection plate 71-1 is earthed. Furthermore, it is desirable to coat the electric field plate 61-4 with an insulator.

In case of the electrical processing apparatus for the diesel engine exhaust gas depicted in FIGS. 9 and 10, the charged PMs are collected on the collection plate 71-1 formed of the base plate 71-1a and the lattice-like fin 71-1b. Then the charged PMs have reached the base plate 71-1a, the PMs having a high electric resistivity p are collected and deposited on the base plate 71-1a, whilst the PMs having a low electric resistivity p are coarsened by the jumping agglomeration phenomenon to be collected on the base plate 71-1a. When a deposition amount of the PMs collected on the base plate 71-1a is increased to exceed a critical amount (the deposition thickness of about 1 mm), the PMs naturally fall off, and the fallen PMs each of which is a coarsened particle are collected by the cyclone precipitator 62 arranged on the rear stage of this exhaust gas electrical processing apparatus 61. The PMs collected by the cyclone precipitator 62 may be periodically taken out to be collected, or a heater may be disposed in the cyclone precipitator to burn the PMs during driving or shutoff.

It is to be noted that a particle agglomeration tube 80 having a honeycomb structure depicted in FIG. 11 as particle agglomeration coarsening means disposed on a front stage of the cyclone precipitator 62. The particle agglomeration tube 80 utilizes an agglomeration effect based on a velocity gradient of a gas flow, and cohesion-agglomeration is efficiently carried out with a velocity gradient of a boundary layer generated when the exhaust gas is passed through this particle agglomeration tube 80 having a honeycomb structure. Further, a particle agglomeration plate 90 depicted in FIG. 12 utilizes an agglomeration effect based on a turbulent flow and, when a plurality of (three in this example) of punching metals 90-1 are arranged at desired intervals and the exhaust gas G1 is passed through the particle agglomeration plate 90 formed of the three punching metals 90-1, a strong turbulent flow is produced and cohesion-agglomeration is efficiently carried out. As a method of provoking the cohesion-agglomeration based on a turbulent flow, a material obtained by three-dimensionally bundling wire sheets or thin metallic wires, etc., can be used in place of the punching metals.
Since the PM particles exiting from the exhaust gas electrical processing apparatus 61 can be grown into larger particles by using the particle agglomeration coarsening means, e.g., the particle agglomeration tube 80 having the honeycomb structure or the particle agglomeration plate 90, the collection can be efficiently performed in the cyclone precipitator 62 provided at the rear stage.

On the other hand, as a method of maintaining each collection plate, i.e., the collection plate 3, 3a, 3b, 3c, or 71-1 disposed in the electrical processing apparatus for the exhaust gas according to the present invention, as depicted in FIG. 13, a bypass duct 55 in which an exhaust gas electrical processing apparatus is not present is additionally arranged between an upstream side and a downstream side of the exhaust gas electrical processing apparatus 61, and a switching valve V provided in the exhaust gas duct on the upstream side can be used to control a flow of the exhaust gas, thereby performing PM collection and maintenance. That is, the switching valve V is changed over to use an A route when the exhaust gas electrical processing apparatus 61 is used to collect PMs 8, and the switching valve V is changed over to use a B route of the bypass duct 55 when maintenance of the collection plate is performed. It is to be noted that the exhaust gas electrical processing apparatus is not present in the bypass duct 55 in the B route, and hence the PMs are discharged without being collected when this route is used, but since a maintenance time of the collection plate is a relatively short time, an actual harm such as air pollution is substantially vanishingly small.

It is to be noted that, besides the maintenance method depicted in FIG. 13, there are also a method of disposing the exhaust gas electrical processing apparatus 61 in such as the bypass duct 55 of the B route to alternately carry out collection and maintenance, a method of disposing the two exhaust gas electrical processing apparatuses 61 in series to alternately carry out collection and maintenance, and others although not shown and, of these methods, the method of disposing the two exhaust gas electrical processing apparatuses 61 in series increases the collection efficiency of the PMs 8 and also enables collection by one exhaust gas electrical processing apparatus even if the other apparatus fails to operate, and hence this method is safe and excellent in terms of an air pollution prevention countermeasure.

### INDUSTRIAL APPLICABILITY

The electrical processing method and apparatus for a diesel engine exhaust gas according to claims 1 and 2 can of course assuredly perform collection and combustion of PMs in an exhaust gas, efficiently remove harmful gas components other than the PMs by combining various kinds of catalytic technologies therewith, and effectively collect PM particles by combining a cyclone precipitator or particle agglomeration coarsening means therewith, and hence it can be extensively applied to collection processing for not only a diesel engine but also various kinds of exhaust gases, thereby greatly contributing to pollution prevention caused due to air pollution.

## Claims

1. An electrical processing method for a diesel engine exhaust gas, wherein a discharge region (2-1) and charge region (2-2) formed of a corona discharge region and a charge region is provided on an upstream side of an exhaust gas path, each particulate matter mainly containing carbon in an exhaust gas (G1) is charged with a corona-discharged electron (10), and a collection region arranged in the exhaust path collects the charged particulate matter, wherein a distal end of the corona discharge region (2-1) on a discharge side of a needle electrode (4) is arranged to face a downstream side of an exhaust gas flow, thereby discharging corona electrons (10) toward the downstream side, wherein; the needle electrode (4) is coated with a material having electrical insulation and corrosion resistance; the needle electrode (4) is inserted and arranged in a seal gas tube (7) formed of an insulator; and a protruding region of the needle electrode (4) from a seal gas tube end is placed in a potential core of a gas flow in the seal gas tube (7), wherein; a stabilizing plate (5-1) is arranged in all of part of the seal gas tube (7); and a plate-shaped member or a honeycomb-shaped member is used for the stabilizing plate (15-1), and **characterised in that** a dummy tube region (5-2) is provided on a tube end placed on the opposite side of a needle electrode distal end side of the seal gas tube (7) in parallel with a direction of an exhaust gas flow; and the seal gas tube (7) having the dummy tube region (5-2) satisfies conditions of L1/D>1.5 and L2/D>0.5, where D is an internal diameter of the seal gas tube (7), L2 is a length of the dummy tube region in the seal gas tube region, and L1 is a length from the dummy tube region to the distal end region.

2. An electrical processing apparatus for a diesel engine exhaust gas, wherein a discharge region (2-1) and charge region (2-2) which charges each particulate matter mainly containing carbon in an exhaust gas (G1) with a corona-discharged electron (10) and is formed of a corona discharge region (2-1) and a charge region (2-2) is provided on an upstream side of an exhaust path (1), and a collection region that collects the charged particulate matter is arranged in the exhaust path (2), wherein a distal end of the corona discharge region (2-1) on a discharge side of a needle electrode (4) is arranged to face a downstream side of an exhaust gas flow, thereby discharging corona electrons (10) toward the downstream side, wherein; the needle electrode (4) is coated with a material having electrical insulation and corrosion resistance; the needle electrode (4) is inserted and arranged in a seal gas tube (7) formed of an insulator; and a protruding region of the needle electrode (4) from a seal gas tube end is placed in a potential core of a gas flow in the seal gas tube (7), wherein; a stabilizing plate (5-1) is arranged in all of part of the seal gas tube (7); and a plate-shaped member or a honeycomb-shaped member is used for the stabilizing plate (15-1), and **characterised in that** a dummy tube region (5-2) is provided on a tube end placed on the opposite side of a needle electrode distal end side of the seal gas tube (7) in parallel with a direction of an exhaust gas flow; and the seal gas tube (7) having the dummy tube region (5-2) satisfies conditions of L1/D>1.5 and L2/D>0.5, where D is an internal diameter of the seal gas tube (7), L2 is a length of the dummy tube region in the seal gas tube region, and L1 is a length from the dummy tube region to the distal end region.

3. The electrical processing apparatus for a diesel engine exhaust gas according to claim 2, wherein; the collection region is constituted of a base plate formed of one plate having no opening in a collection surface thereof and a lattice-like fin provided on a collection surface side of the base plate.

4. The electrical processing apparatus for a diesel engine exhaust gas according to claim 2 or 3, wherein a cyclone precipitator (62) is additionally provided on a rear stage of the electrical processing apparatus for an exhaust gas.

5. The electrical processing apparatus for a diesel exhaust gas according to claim 4, wherein a collection region of the electrical processing apparatus for an exhaust gas is constituted by arranging one or more collection places (71-1) each of which is formed of a base plate (71-1a) made of one plate having no opening on a collection surface thereof and a lattice-like fin (71-1b) provided on the collection surface side of the base plate so as to form a gap between the collection plates and the apparatus main body inner wall.

6. The electrical processing apparatus for a diesel engine exhaust gas according to claim 4 or 5, wherein; particle agglomeration coarsening means is arranged on a front stage of the cyclone precipitator (62); and either a particle agglomeration tube (80) having a honeycomb structure or a particle agglomeration plate (90) constituted by arranging a plurality of punching metals or wire sheets at predetermined intervals is used as the particle agglomeration coarsening means.

## Patentansprüche

1. Ein elektrisches Behandlungsverfahren für ein Dieselmotorabgas, wobei eine Entladungszone (2-1) und eine Ladezone (2-2), gebildet aus einer Coronaentladungszone, und eine Ladezone stromauf eines Abgaswegs vorgesehen sind, jedes Partikel, das in der Hauptsache Kohlenstoff enthält, in einem Abgas (G1) mit einem Coronaentladungselektron (10) geladen wird und eine Sammelzone im Abgasweg die geladenen Partikel sammelt, wobei ein distales Ende der Coronaentladungszone (2-1) auf einer Entladungsseite einer Nadelelektrode (4) so angeordnet ist, dass sie auf eine Abströmseite eines Abgastroms gerichtet ist, wodurch sie Coronaelektronen (10) in Richtung der Abströmseite entlädt, wobei die Nadelelektrode (4) mit einem Material mit elektrischer Isolierung und Korrosionsbeständig beschichtet ist; die Nadelelektrode (4) in ein aus einem Isoliermaterial gebildetes Dichtgasrohr (7) eingesetzt und angeordnet wird und ein aus einem Dichtgasrohr hervorstehender Bereich der Nadelelektrode (4) in einen potentiellen Kernbereich eines Gasstroms im Dichtgasrohr (7) positioniert wird, wobei eine Stabilisierungsplatte (5-1) ganz in einem Teil des Dichtgasrohrs (7) angeordnet wird und ein plattenförmiges Teil oder eine wabenförmiges Teil für die Stabilisierungsplatte (15-1) eingesetzt wird, und **dadurch gekennzeichnet, dass** eine Blindrohrzone (5-2) an einem Rohrende an der entgegengesetzten Seite einer Nadelelektrode an der distalen Endseite des Dichtgasrohrs (7) parallel mit einer Richtung eines Abgasstroms vorgesehen ist; und das Dichtgasrohr (7) mit der Blindrohrzone (5-2) die Bedingungen von L1/D>1,5 und L2/D>0,5 erfüllt, wobei D ein interner Durchmesser des Dichtgasrohrs (7), L2 eine Länge der Blindrohrzone in der Dichtgasrohrzone und L1 eine Strecke von der Blindrohrzone zur distalen Endzone ist.

2. Eine elektrische Behandlungsvorrichtung für ein Dieselmotorabgas, wobei eine Entladungszone (2-1) und eine Ladezone (2-2), die jedes Partikel, das in der Hauptsache Kohlenstoff enthält, in einem Abgas(GF1) mit einem Coronaentladungselektron (10) auflädt, und aus einer Coronaentladungszone (2-1) gebildet wird und eine Ladezone (2-2) stromauf eines Abgaswegs (2) vorgesehen sind, und eine Sammelzone, die geladene Partikel sammelt, im Abgasweg (2) angeordnet ist, wobei ein distales Ende der Coronaentladungszone (2-1) auf der Entladungsseite einer Nadelelektrode (4) so ausgerichtet ist, dass es auf eine Abströmseite eines Abgasstroms gerichtet ist, wodurch Coronaelektronen (10) in Richtung der Abströmseite entladen werden, wobei die Nadelelektrode (4) mit einem Material mit elektrischer Isolierung und Korrosionsbeständig beschichtet ist; die Nadelelektrode (4) in ein aus einem Isoliermaterial gebildetes Dichtgasrohr (7) eingesetzt und angeordnet wird und ein aus einem Dichtgasrohr hervorstehender Bereich der Nadelelektrode (4) in einen potentiellen Kernbereich eines Gasstroms im Dichtgasrohr (7) positioniert wird, wobei eine Stabilisierungsplatte (5-1) ganz in einem Teil des Dichtgasrohrs (7) angeordnet wird und ein plattenförmiges Teil oder eine wabenförmiges Teil für die Stabilisierungsplatte (15-1) eingesetzt wird, und **dadurch gekennzeichnet, dass** eine Blindrohrzone (5-2) an einem Rohrende an der entgegengesetzten Seite einer Nadelelektrode an der distalen Endseite des Dichtgasrohrs (7) parallel mit einer Richtung eines Abgasstroms vorgesehen ist; und das Dichtgasrohr (7) mit der Blindrohrzone (5-2) die Bedingungen von L1/D>1,5 und L2/D>0,5 erfüllt, wobei D ein interner Durchmesser des Dichtgasrohrs (7), L2 eine Länge der Blindrohrzone in der Dichtgasrohrzone und L1 eine Strecke von der Blindrohrzone zur distalen Endzone ist.

3. Eine elektrische Behandlungsvorrichtung für ein Dieselmotorabgas entsprechend Anspruch 2, wobei die Sammelzone aus einer Basisplatte besteht, die aus einer Platte gebildet wird, die keine Öffnung auf einer Sammelfläche hat und auf einer Sammelfläche der Basisplatte eine gitterartige Rippe vorgesehen ist.

4. Die elektrische Behandlungsvorrichtung für ein Dieselmotorabgas entsprechend Anspruch 2 oder 3, wobei ein Fliehkraftabscheider (62) zusätzlich am hinteren Bereich der elektrischen Behandlungsvorrichtung für ein Abgas vorgesehen ist.

5. Eine elektrische Behandlungsvorrichtung für ein Dieselmotorabgas entsprechend Anspruch 4, wobei eine Sammelzone einer elektrischen Behandlungsvorrichtung für ein Abgas sich aus der Anordnung von einer oder mehreren Sammelplatten (71-1) zusammensetzt, von denen jede aus einer Basisplatte (71-1a) gebildet wird, die aus einer Platte ohne Öffnung auf einer Sammelfläche dieser und einer gitterartigen Rippe (71-1 b) auf der Sammelfläche der Basisplatte besteht, so dass zwischen den sammelplatten und der Innenwand der Hauptvorrichtung eine Lücke gebildet wird.

6. Die elektrische Behandlungsvorrichtung für ein Dieselmotorabgas entsprechend Anspruch 4 oder 5 wobei eine Vorrichtung zur Vergröberung der Partikelagglomeration im vorderen Bereich des Fliehkraftabscheiders (62) angebracht ist und entweder ein Partikelagglomerationsrohr (80) mit einer Wabenstruktur oder eine Partikelagglomerationsplatte (90), die durch Anordnung einer Reihe von Stanzmetallteilen oder Drahtgittern in vorbestimmten Abständen gebildet wird, als Vorrichtung zur Vergröberung der Partikelagglomeration verwendet wird.

## Revendications

1. Moyen de traitement électrique pour gaz d'échappement de moteur diesel, dans lequel une région de décharge (2-1) et une région de charge (2-2) sont formées d'une région de décharge couronne et une région de charge est prévue sur le côté amont d'un parcours des gaz d'échappement, chaque matière particulaire contenant principalement du carbone dans un gaz d'échappement (G1) est chargée d'un électron à décharge couronne (10) et une région réceptrice aménagée dans le parcours d'échappement recueille la matière particulaire chargée, dans lequel une extrémité distale de la région de décharge couronne (2-1) d'un côté de décharge d'une aiguille-électrode (4) est agencée de manière à faire face à un côté aval d'un écoulement de gaz d'échappement, déchargeant ainsi des électrons (10) en direction du côté aval, dans lequel ; l'aiguille-électrode (4) est revêtue d'un matériau doté de caractéristiques d'isolation électrique et de résistance à la corrosion ; l'aiguille-électrode (4) est insérée et placée dans un tube de gaz d'étanchéité (7) formé d'un isolant ; et une région en saillie de l'aiguille-électrode (4) dépassant d'un tube de gaz d'étanchéité est placée dans un noyau potentiel d'un écoulement de gaz dans le tube de gaz d'étanchéité (7) ; dans lequel ; une plaque de stabilisation (5-1) est placée dans la totalité d'une partie du tube de gaz d'étanchéité (7) ; et un élément de la forme d'une plaque ou un élément de la forme d'un nid d'abeille est utilisé pour la plaque de stabilisation (15-1), et **caractérisé en ce qu'**une région de tube borgne (5-2) est prévue sur une extrémité du tube placé du côté opposé d'un côté de l'extrémité distale de l'aiguille-électrode du tube de gaz d'étanchéité (7) en parallèle avec une direction d'un écoulement de gaz d'échappement ; et le tube de gaz d'étanchéité (7) possédant la région de tube borgne (5-2) satisfait aux conditions de L1/D>1,5 et L2/D>0,5, où D est un diamètre intérieur du tube de gaz d'étanchéité (7), L2 est une longueur de la région du tube borgne située dans la région du tube de gaz d'étanchéité et L1 est une longueur allant de la région du tube borgne à la région de l'extrémité distale.

2. Appareil de traitement électrique du gaz d'un moteur diesel, dans lequel sont prévues une région de décharge (2-1) et une région de charge (2-2) qui charge chaque matière particulaire contenant principalement du carbone dans un gaz d'échappement (G1) avec un électron à décharge couronne (10) et est formée d'une région de décharge couronne (2-1) et une région de charge (2-2) est prévue sur un côté aval d'un parcours d'échappement (1) et une région réceptrice qui recueille la matière particulaire est placée dans le parcours d'échappement (2), dans lequel une extrémité distale de la région de décharge couronne (2-1) sur le côté de décharge d'une aiguille-électrode (4) est agencée de manière à faire face à un côté aval d'un écoulement de gaz d'échappement, déchargeant ainsi des électrons à décharge couronne (10) en direction du côté aval, dans lequel ; l'aiguille-électrode (4) est revêtue d'un matériau doté de caractéristiques d'isolation électrique et de résistance à la corrosion ; l'aiguille-électrode (4) est insérée et placée dans un tube de gaz d'étanchéité (7) formé d'un isolant ; et une région en saillie de l'aiguille-électrode (4) dépassant d'une extrémité de tube de gaz d'étanchéité est placée dans un noyau potentiel d'un écoulement de gaz dans le tube de gaz d'étanchéité (7), dans lequel ; une plaque de stabilisation (5-1) est placée dans la totalité d'une partie du tube de gaz d'étanchéité (7) ; et un élément de la forme d'une plaque ou un élément de la forme d'un nid d'abeille est utilisé pour la plaque de stabilisation (15-1) et **caractérisé en ce qu'**une région du tube borgne (5-2) est prévue sur une extrémité du tube placé du côté opposé du côté de l'extrémité distale de l'aiguille-électrode du tube de gaz d'étanchéité (7) en parallèle avec une direction d'un écoulement du gaz d'échappement ; et le tube de gaz d'étanchéité (7) possédant la région du tube borgne (5-2) satisfait aux conditions de L1/D>1,5 et L2/D>0,5, où D est un diamètre interne du tube de gaz d'étanchéité (7), L2 est une longueur de la région du tube borgne située dans la région du tube de gaz d'étanchéité et L1 est une longueur allant de la région du tube borgne à la région de l'extrémité distale.

3. Appareil de traitement électrique pour gaz d'échappement de moteur diesel selon la revendication 2, dans lequel ; la région réceptrice est constituée d'une plate de base formée d'une plaque n'ayant aucune ouverture dans sa surface réceptrice et une ailette de type grille est prévue sur un côté de la surface réceptrice de la plaque de base.

4. Appareil de traitement électrique pour gaz d'échappement selon la revendication 2 ou 3, dans lequel un précipitateur cyclonique (62) est en outre prévu en deuxième phase de l'appareil de traitement électrique pour un gaz d'échappement.

5. Appareil de traitement électrique pour un gaz d'échappement diesel selon la revendication 4, dans lequel une région réceptrice de l'appareil de traitement électrique pour un gaz d'échappement est constituée par l'agencement d'un ou de plusieurs emplacements récepteurs (71-1), chacun desquels est formé d'une plaque de base (71-1a) faite d'une plaque n'ayant aucune ouverture sur sa surface réceptrice et d'une ailette de type grille (71-1 b) prévue sur le côté de la surface réceptrice de la plaque de base de manière à former un espace entre les plaques réceptrices et la paroi intérieure du corps principal de l'appareil.

6. Appareil de traitement électrique pour un gaz d'échappement de moteur diesel selon la revendication 4 ou 5, dans lequel ; un moyen de granocroissance de l'agglomération de particules est placé en première phase du précipitateur cyclonique (62) ; et soit un tube d'agglomération de particules (80) possédant une structure en nid d'abeille, soit une plaque d'agglomération de particules (90) constituée par l'agencement d'une pluralité de métaux de perforation ou de feuilles de toiles à des intervalles prédéterminés est utilisé(e) comme moyen de granocroissance de l'agglomération de particules.
